# EUROPEAN PATENT APPLICATION

(11) **EP 3 468 175 A1**
(43) Date of publication of application: **10.04.2019**
(21) Application number: 18209303.9
(22) Date of filing: 14.10.2005
(51) Int. Cl.: H04N 7/16, H04N 5/50, H04N 5/44, H04N 21/426, H04N 21/438, H04N 21/4405, H04N 21/4623, H04N 7/167

(54) **SPEEDING UP CHANNEL CHANGE**

(30) Priority: 15.10.2004 US 61910504 P
(62) Divisional of application: 05808871.7
(71) Applicant: OpenTV, Inc., San Francisco, CA 94111 (US)
(72) Inventor: DUREAU, Vincent, Palo Alto California 94306 (US); KIM, Patty, Irvine California 92603 (US); ZDEPSKI, Joel, Mountain View California 94040 (US)
(74) Representative: Ipside

(57) **Abstract**

A method and apparatus is described to reduce delay when changing channels in a television environment. The method may comprise receiving a plurality of television channels from a remote content provider wherein each channel includes channel information required to display the channel. At least one channel of the plurality of channels may be identified as a stored channel and channel information of the at least one stored channel may be stored in storage (e.g. in a circular buffer). Thereafter, upon selection of the stored channel, the stored channel information is accessed for display. In an example embodiment, the storage may be updated to maintain a most recently received -frame and subsequent MPEG signals of the stored channel. Accordingly, when changing channels it may not be necessary to wait for the next -frame to display a newly selected channel.

## Description

### RELATED APPLICATION

This application claims the priority benefit of U.S. Provisional Application Serial No 60/619,105 filed 15 October 2004, which application is incorporated herein by reference.

### COPYRIGHT NOTICE

A portion of the disclosure of this patent document contains material to which the claim of copyright protection is made. The copyright owner has no objection to the facsimile reproduction by any person of the patent document or the patent disclosure, as it appears in the U.S. Patent and Trademark Office file or records, but reserves all other rights whatsoever. Copyright 2002 OpenTV, Inc.

### TECHNICAL FIELD

The present invention pertains generally to the area of digital television systems. In an example embodiment, the invention provides a method and apparatus to enhance channel changes at a user display in a digital television network.

### BACKGROUND

At the center of digital television communication is a set-top box (STB), which receives the broadcast content and connects to a television set and typically sits on top of it. The STB runs software referred to as middleware, consisting of computer programs which control the flow of broadcast programs and internet traffic as well as data from the viewer. The STB must be able to handle the bi-directional data flow. Much effort has been put into extending the capabilities of the STB in order to enhance the digital television viewing experience.

Although the digital television format has many advantages over analog television, and extends the capabilities of the analog television format, certain difficulties arise that are inherent within the digital format. As an example, switching between channels using analog methods is very fast; however, switching in digital television format is relatively slow. There are several reasons for this difference in switching speed in analog and digital television. Typically, the digital television signals comprise large data quantities and require a large amount of memory on the STB. To aid in transmission, there are methods for compressing data, one of which is known as MPEG. Even with MPEG compression, however, delivery of the first picture of a selected digital television channel upon changing channels is a time-consuming process due to the delays associated with digital television.

A significant portion of the delay in switching between channels in a digital television network is attributable to the acquisition of digital data, including decrypting and decoding information, and the processing of the data for the newly selected channel. Additional delay is incurred due to the nature of the MPEG signals. MPEG video is broken up into a hierarchy of layers to facilitate error handling, random searching, editing, and synchronization with other signals, for example, an audio bit stream. The first MPEG layer is known as the video sequence layer and comprises information such as frame size, bit rate, and frame rate. The second MPEG layer is the group of pictures layer, which comprises one or more groups of frames, some frames being intra-frames (I-frames) and others being predictive frames (P-frames) or bi-directional frames (B-frames). The third layer, the picture layer, comprises the frame and frame size information.

The video sequence of the group of pictures layer is built upon the most recently received I-frame and its subsequent P- and B-frames. The I-frame is the critical first frame of the video sequence. If a viewer changes channels sometime after the time at which an I-frame was transmitted, the viewer must wait until the next I-frame is transmitted and received to decode subsequently received Panel B-frames and P-frames. I-frames are transmitted at a limited frequency, such as typically twice a second or even less frequent. In many applications, the sequence is also protected from unauthorized viewing by scrambling the compressed bitstream during transmission. In order to descramble the I-frames (and, in most cases, B-frames and P-frames as well), it is also necessary to utilize control words used by the conditional access system. These control words are extracted from Entitlement Control Messages (ECMs) during a decryption process and are used in descrambling the MPEG signal received from a given channel. The need for descrambling and decryption further adds to the channel switching delay time, as control words are also sent at low frequency and decryption is a time consuming operation.

Finally, the digital reception and display of the digital television signal involves the use of one or more buffers within the STB in which the compressed signals are temporarily stored for short periods of time. The broadcast signal is pulled from the incoming transport stream and sent to a buffer stream. An MPEG decoder later pulls the stored broadcast signal from the stream buffer and, after decoding, sends the resultant signal to the video display. In some cases the decompressed video frames are further buffered to be available for subsequent decoding operations. The use of the buffer allows for many new possibilities, such as playing back a live broadcast while it is being recorded simultaneously. The buffer and decoder, however, both cause delays as do waiting for decryption and control words necessary to decode and access a protected video sequence.

### SUMMARY

A method and apparatus to reduce delay when changing channels in a television environment is described.

The invention extends to a machine-readable medium including instructions for performing any one or more of the methodologies described herein.

Other features will be apparent from the accompanying drawings and from the detailed description that follows.

### BRIEF DESCRIPTION OF THE DRAWINGS

**Figure 1** is a diagram of the path that a signal traverses from a broadcast stream to a video display;
**Figure 2** is a diagram representing a sequential arrangement of MPEG compressed video frames in a portion of an MPEG video sequence;
**Figure 3** is a diagram representing an example buffer load and flush scheme utilized in a set-top box;
**Figures 4-6** show apparatus, in accordance with example embodiments, that buffers I-frames to reduce delay between selecting a channel and displaying the selected channel in a television environment;
**Figures 7-8** show apparatus, in accordance with example embodiments, that buffers control words to reduce delay between selecting a channel and displaying the selected channel in an television environment;
**Figure 9** shows a conditional access card in accordance with an example embodiment;
**Figure 10** shows a method, in accordance with an example embodiment, for reducing delay between selecting a channel and displaying the selected channel in a television environment; and
**Figure 11** shows a diagrammatic representation of machine in the example form of a computer system within which a set of instructions, for causing the machine to perform any one or more of the methodologies discussed herein, may be executed.

### DETAILED DESCRIPTION

An embodiment addresses the problems of time delays between the moment of choosing a digital television channel and the moment at which the first image from the selected digital television channel appears on the screen (e.g., television screen) in a digital television environment. Generally, this delay may be due to several cumulative delay factors, for example, buffer access delay, MPEG sequencing delay, decrypting delay, and decoding delay. It is, however, be appreciated the methodologies described herein are not restricted to broadcasting but apply equally to unicasting. Likewise, the term "television channel" is intended to include any video or moving picture that is communicated to users via any network and is intended to include communications via the Internet.

In an embodiment, a larger storage capacity in a Set-Top Box (STB) and client device allows for more signals to be retained in the buffer by the client/STB. These extra signals may comprise signals from TV channels other than a channel currently being viewed. Existing STBs, which typically only have one tuner and one MPEG decoder, can acquire multiple channels and transfer them into a single buffer as long as these channels are located in the same frequency. For example, the most popular six channels may be multiplexed together (e.g., CNN, ESPN, WB, ABC, NBC and CBS). An embodiment of the present invention takes advantage of STBs (optionally with mass storage) which have multiple front-end tuners and therefore are able to acquire multiple programs simultaneously. Multiple digital channels maybe multiplexed on a single frequency. Moreover, new MPEG chipsets may decode multiple streams at the same time. Likewise, faster smart cards (or equivalent security devices such a non-removable secure device glued on the motherboard) or a remote authentication server, could speed up acquisition of control words. An example embodiment may utilize all of these new capabilities to reduce the delay in channel switch times on digital television or information networks (satellite or cable).

An example embodiment provides storage for a received MPEG signal for a non-viewed channel in a circular buffer. The buffer is updated (e.g., flushed) periodically so that only the most recent portion of each digital television signal is retained and stored in the buffer at all times. By providing constant access to the latest MPEG frames, the buffered channel signal can be viewed without having to wait through a buffer delay or an MPEG sequencing delay. In particular, the most recently transmitted entry point (typically an I-frame) is stored in the buffer at all times. Upon changing channels (selecting a new channel), the stored signal for the new channel (second channel) is accessed from the entry point that has been captured in the buffer. In an embodiment where the maximum time between two entry points is known, it is possible to dimension the buffer so that it will always contain an entry point. Further, enough data may be buffered in addition to the I-frame to include a full Video Buffer Verifier (VBV) of data which is a construct in the MPEG standard that helps ensure MPEG data stream never underflows or overflows the buffer on the MPEG decoder. The image displayed on the television (or any display device) may lag behind the live broadcast, depending on the position of the entry point in the buffer.

In an alternative embodiment with a plurality of tuners, channels that are broadcast at frequencies other than the frequency of the channel currently being viewed are stored. In an embodiment with a plurality of decoders, the decoders that are not only used to decode the viewed channel but are also used to decode the signals from other channels not being viewed, thereby removing decoding delays from the channel switching time. Thus, the decoded signal is ready for display upon changing channels. In an example embodiment only a single decoder may be present that can decode faster than real-time and the decoder may time slice between multiple decode sessions. For example, the decoder may time slice between a decode session A on channel A and a decode session B on channel B (e.g., decompress one frame of channel A, then one frame of channel B, etc.). In these circumstances, the decoder may buffer the decompressed output of channel B, but only display the decompressed output for the current channel (e.g., channel A). When the user switches to channel B, the decoded frames are presented immediately.

Due to the number of existing channels outnumbering the number of channels that may be stored, an embodiment includes a set of rules, which are provided for determining which channel information to store in the circular buffer. These rules may be based, *inter alia,* on frequency of channel use, currently viewed channels, and adjacency to the channel currently being viewed.

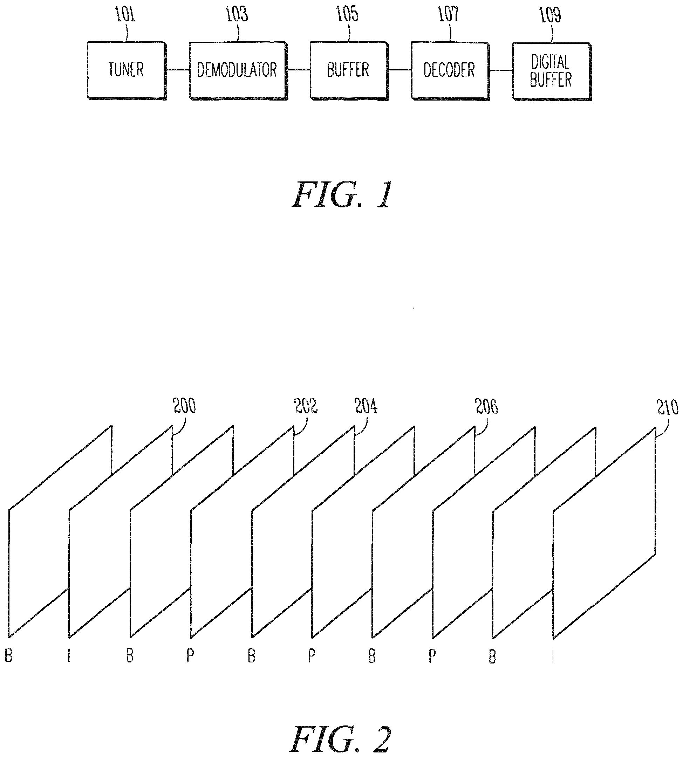

**Figure 1** shows a diagram of an example path that a signal takes from the broadcast stream to the user's video display. For example, an MPEG stream provided by a content provider, is broadcast by a head-end and received by a tuner 101, and is then sent to a demodulator 103 coupled to a client device. The demodulator 103 stores the signal into a circular buffer 105 for later access processing and display. Optionally, an output of the demodulator 103 may go through a demultiplexer that may reject some of the packets of the MPEG stream (e.g., the demultiplexer may only keep packets relevant to the channels that are to be buffered). At some later time, when the buffer 105 is filled with data to the level specified in the MPEG stream, the content of the buffer is sent to the decoder 107. The decoder 107 reads in a coded bit stream and may output decoded pictures, audio samples, or data objects to a digital buffer 109.

**Figure 2** shows a portion of an MPEG video frame sequence. Frames are broadcast by the head-end, received by the client, and read sequentially from left to right as shown in **Figure 2****.** I-frames 200, 210 are frames whose coding is based upon spatial redundancies within the frame. Other frame types, such as P-frames 202 and B-frames 204, use the I-frame as a basis for temporal predictions and coding. P-frames comprise elements predicted and based on the previous I-frame or P-frame. For example, in the MPEG-2 standard, B-frames comprise predicted elements from an immediately subsequent frame as well as from an immediately previous frame. Frames that predict the content of B-frames may be either P- or I-frames. B-frames are not used in prediction of any other frame type. It will however be appreciated that the invention also applies to other standards (e.g., MPEG-4, Windows Media, H.264, or the like).

To create a video sequence, it is necessary to synchronize on and build upon an I-frame for any given sequence. In a typical system, a viewer switches to the channel at the point when, for example, the B-frame 206 is currently being received. Thus, the viewer can not view this frame, as the basis I-frame 200 has not been captured by the tuner. Instead, the viewer must wait until the next I-frame 210 is received before being able to decode and view an image from the newly selected channel, this first image being the image of I-frame 210. The frequency at which I-frames arrive is about twice per second or slower on average, so the total possible delay from waiting on an I-frame can be up to approximately 500 milliseconds and more. An average delay time for arrival of an I-frame, due to MPEG sequencing, may be approximately 250 milliseconds.

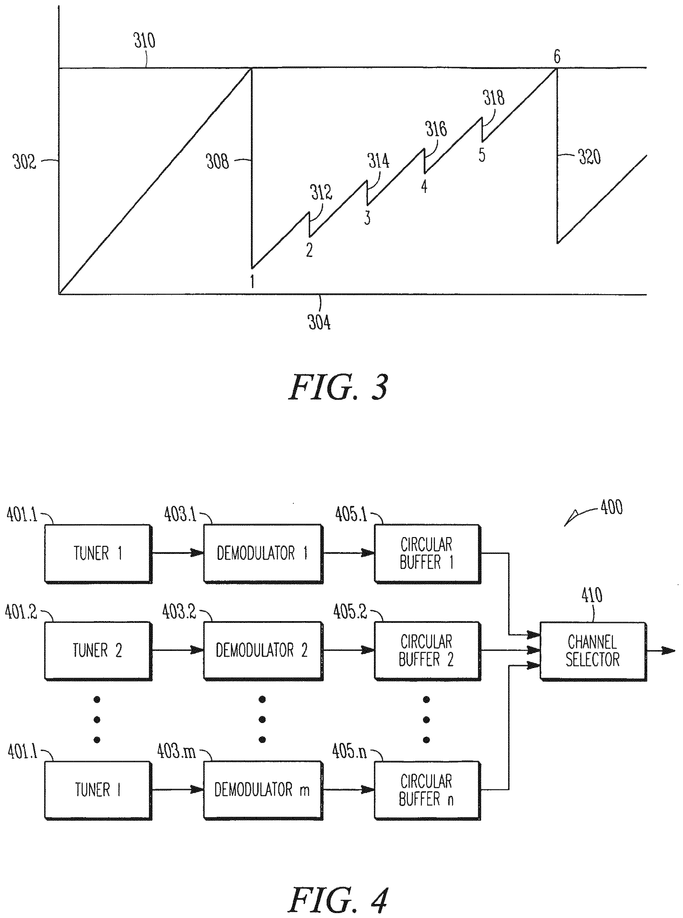

Another typical switching delay is associated with the operation of the circular buffer 105 (which may include the VBV buffer). **Figure 3** shows a graph of buffer load 302 (see buffer 105) versus time 304. In order to avoid buffer overflow or underflow during the decoding process, the circular data buffer 105 fills until it reaches a desired buffer level 310, at which time, it discharges. A first discharge is shown in **Figure 3** at the time 1 (see arrow 308). Frames are shown by way of example to be added incrementally to the buffer at times 2 (see arrow 312), 3 (see arrow 314), 4 (see arrow 316), and 5 (see arrow 318). At time 6 (see arrow 320), a newly acquired frame causes the bit load to exceed the desired buffer level, and the buffer is once again discharged into the decoder 107. In this manner, only the most recent frames are stored in the buffer 105. The wait time for the filling of the buffer is B/R, where B is the desired buffer level, and R is the rate of the bit stream. The average time for the buffer to fill may, for example, be approximately 400 msec. In an example embodiment, the buffer flushes all data received prior to each I-frame. Each I-frame may then be placed at the start of the buffer 105 and subsequently received data written in after the I-frame.

Descrambling and decoding of the MPEG stream may cause further delays. During descrambling, the MPEG stream is secured by interaction with control words (obtained during decryption of the ECMs received in the stream) of the conditional access system, adding further delay. Decoding, however, may take place in real time or better. As a consequence, the decoding speed may not be less than 30 frames per second for NTSC and 25 for PAL. The accumulation of all these delays leads to an overall delay of at least 3/4 of a second and upwards, and often from 1.5 seconds to 3 seconds.

An example of these delays is shown in the table below:

| Task | Sub-Task | Worst case seconds |
|---|---|---|
| Find out where the channel is | NIT, SDT | 0.00 |
| Tune to frequency | | 0.40 |
| Acquire PSI table | | 0.20 |
| | PAT | 0.10 |
| | PMT | 0.10 |
| CA | | |
| | Acquire ECM | 0.10 |
| | Transfert to SC | 0.10 |
| | Decrypt CW | 0.40 |
| | Transfert from SC | 0.10 |
| MPEG | | |
| | Wait For Iframe | 0.50 |
| | Buffer filling | 0.20 |
| | | |
| **TOTAL** | | **2.20** |

In the table, the following abbreviations are used:
NIT - Network Information Table.
SDT - Service Description Table.
PSI - Program Specific Information.
PAT - Program Association Table.
PMT - Program Map Table.
CA - Conditional Access.
ECM - Entitlement Control Message.
SC - Smart Card.
CW - Control Word.

As can bee seen from the example table, a fairly large portion of the delay when switching channels arises from decrypting the control word (.4 s in the example above) and waiting for the I-frame (0.5 s in the example above). Accordingly, at least reducing the delay associated with the control word and I-frame can reduce the delay significantly.

In an embodiment, decryption keys such as control words are stored for immediate access for decryption and access upon selection of a channel, or for decryption and access in real time when using multiple buffers, and/or multiple decoders.

An example embodiment may reduce (and, for example, substantially eliminate) channel switching delays by storing, decoding and accessing MPEG streams from channels other than the channel currently being viewed. Once a viewer selects a channel, in an example embodiment, the STB (receiver) no longer needs to retrieve the stream immediately from the broadcast stream, but rather the STB retrieves the stored signal initially from the buffer without having to wait on arrival of additional data, for example, I-frames or control words. An example embodiment pre-processes the buffer 105 to ensure that the latest I-frame is at the beginning of the buffer 105 or at least at a pointer location pointing to a location in the buffer 105.

In an example embodiment, a STB 400 (see **Figure 4****)** may comprise two or more tuners 401.1-401.1, two or more demodulators 403.1-403.m, and two or more circular buffers 405.1-405.n. A second tuner 401.2 gives the viewer the advantage of receiving channels that are transmitted at separate frequencies. A first tuner 401.1 may be tuned to the channel currently being viewed. The second tuner 401.2 simultaneously receives a signal from a separate channel not being viewed. The second tuner 402.2 sends its data to a second demodulator 403.2 and then into a second circular buffer 405.2. Referring to **Figures 2** **and** **4****,** when a viewer switches to a new channel, for instance, at the moment that frame 206 is being received by the second tuner 401.2, at least all of the frames between and including frames 200 and 206 are currently stored in the buffer 405.2. The signal from the newly-chosen channel can immediately be read out of the buffer 405.2, from the position of the most recent I-frame 200 in the buffer 405.2. The advantage is that the viewer can view the newly-chosen channel more quickly, because the latest I-frame 200 for the newly selected channel is already in the buffer 405.2 associated with the STB, and the STB (and thus the viewer) does not have to wait for the next I-frame 210 to be received as required in prior art STBs. Since the frames subsequent to frame 206 are also placed in the buffer 405.2, the frame immediately after frame 206 can take its place in the buffer 405.2 adjacent to the currently stored signal of the channel of tuner 402.2. In addition, assuming enough data subsequent to the I-frame has been buffered (in the VBV buffer), it is possible to start decrypting and decoding the I-frame immediately. A clear uninterrupted transition can therefore be performed between the stored signal and the retrieved signal with reduced or minimized delay. Any one or more additional channels may be processed with further tuners 401.1, demodulators 403.m, and buffers 405.n. A channels selector 410 may select channels in response to a viewer selection.

An example embodiment enables switching to the new channel to appear to be immediate; however, the image displayed on the display device (e.g., TV, computer screen or the like) may lag behind the actual broadcast. This lag is due to the need to access the most recent I-frame of a stored sequence rather than the most recent frame of the broadcast sequence. Thus, the time between the last stored I-frame and the current broadcast frame represents a lag time between the displayed frame from the stored signal and the current broadcast frame. The amount of this lag depends on the position of the entry point in the buffer at the time channel selection occurs.

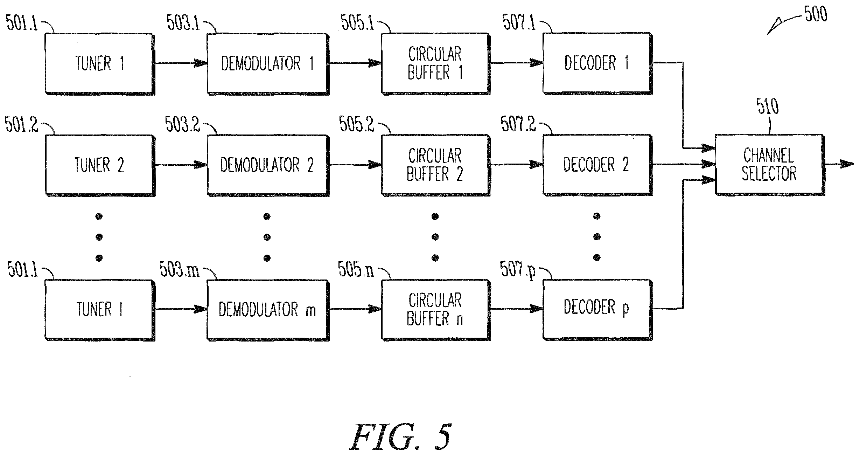

The ability of the example embodiments to reduce channel switching delays increases with the size of the buffer 105. In an embodiment shown in Figure 5, a STB or receiver 500 further comprises multiple decoders 507.1-507.p, thereby allowing multiple incoming streams to be decoded before being sent to a video display buffer. In this embodiment, decoding takes place prior to channel selection further reducing delays and it is possible for the viewer to switch (see switch 510) completely to the most recent I-frame of the decoded signal, and thus to begin viewing immediately. Using additional decoders for the non-viewed channels may thus provide an advantage of reducing delay due to signal decoding. It will be appreciate that the channel selector 510 may be responsive to a remote control device (e.g., a handheld remote control operable by a viewer), a computer keyboard, or the like. In an embodiment, channel switching may be done automatically, without input from the viewer. For example, the receiver could switch seamlessly from a live channel to a targeted commercial transmitted on another channel, and then return seamlessly to the main live program at the end of the commercial. For example, a targeted commercial could be inserted in the following manner: a viewer may watch channel A and, during a commercial break, channel A may transmit 4 different commercials on 4 other channels (A, A1, A2, A3) each of which may be targeted at 4 different profiles. In these circumstances, the receiver may detect a trigger indicating an advertisement break (for example, the trigger can be transmitted in-band, multiplexed with the Audio/Video). The receiver may then buffer and tune to the appropriate channel depending on the profile of the viewer. In an embodiment, for the transition to be seamless, transmission of the trigger and of the advertisements/commercials may be scheduled shortly before the commercial break to make sure that sufficient data is stored in the buffer at the time the receiver switches channels.

Further, it will be appreciated that the methodology described in this document is not restricted to switching between channels received by tuner 1 401.1 and tuner 2 401.2 and can apply to switching between any two channels. Accordingly, the methodology can also apply when switching between any two buffered channels. Further, although example embodiments are described with reference to I-frames defining an entry point required for processing a television signal for display to a viewer, other entry points my be defined in different deployments or compression methods. Further, the storage may be updated to maintain a most recently received entry point of the stored channel.

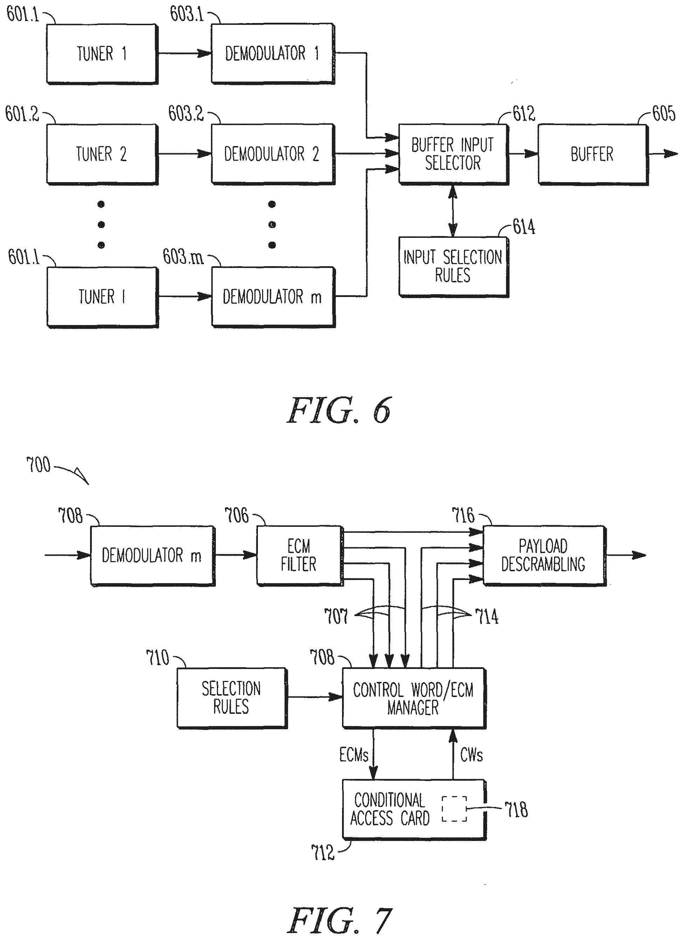

It will be appreciated that it may not be practical to have a tuner for every available channel. Accordingly, an example embodiment also determines which channel signals to store in the storage or circular buffer. As shown in Figure 6, a plurality of tuners 601.1-601.1 are connected to a plurality of demodulators 603.1-603.m. A buffer input selector 612 determines which channel is to be fed into a particular buffer (e.g., buffer 605). It will be appreciated that more than one buffer may be present. There may be a variety of strategies or rules (see input selection rules 614) for determining which channels signals to store in the circular buffer 605 (or any other buffer capable of receiving one of many channels). In an example embodiment, channels adjacent to the currently viewed channel are stored, where an adjacent channel can refer to channels whose channel numbers are adjacent to the current channel in a given mode (e.g., in a favorite channels mode, an all channels mode, or other mode or configuration). Another example channel selection rule or mode may comprise a list of only those favorite channels of the viewer based on the viewing habits and history for the viewer. Another example selection rule or mode may select and store the signals of channels that are watched with higher frequency (more regularly), where the frequency can be determined either on a long-term general basis or on a more recent basis. In yet another example mode, those channels that have been viewed last are stored. In an example with two buffers, an option may be provided to store the next channel up or down when the user has pushed the up or down button last. The advantage of these example strategies is that those channels that are most likely to be next chosen by the viewer will have the least amount of display delay upon selection.

**Figure 7** shows apparatus 700, in accordance with an example embodiment, that buffers control words to reduce delay between selecting a channel and displaying the selected channel in a television environment. A demodulator 703 may demodulate multiple television channels received on a single frequency from a content provider (e.g., a transponder of a content provider). Thereafter, an Entitlement Control Message (ECM) filter may extract an ECM associated with each decoded channel and communicate the ECMs to a control word manager 708 (see lines 707 which show three example ECMs). Unlike prior art system that ignore the ECMs of channels not currently being selected and viewed by a user, the apparatus 700 stores or buffers control words of channels not currently selected based on selection rules.

For example, the control word manager 708 may receive ECMs from multiple channels and select which control words it will buffer based on selection rules or criteria provided in a selection rules module 710. The selection rules may be similar to the input selection rules 614 that may determine which of the channels should have their I-frames stored. Different selection rules or criteria may be applied to decide which channels to process at any point in time. For example, the STB could process the most frequently watched channels, a list of favorite channels specified by the viewer, a list of the most important channels specified by an operator, adjacent channels to the one the viewer is currently watching (e.g. monitor the current channel, as well as the 5 previous channels and the 5 next channels in the order tied to program keys on a remote control), or a combination of criteria. In an embodiment, the number of channels to process may be dynamic. For example, the STB or receiver could send the next control word in the list (e.g., going down in an order of priority in a list of channels) until decryption of a higher priority control word is required. Further, in an embodiment, the priority list may be updated dynamically (e.g. when the user changes channel). Since the ECMs change periodically, in an embodiment the list will also change periodically. For example, a new ECM may appear on a high priority channel, in which case the new ECM will be inserted at the top of the list. On the other hand, some ECMs will expire and be removed from the list.

Once the ECMs of the channels have been accumulated they may then be communicated to a conditional access card 712 (e.g., a smart card associated with the STB) or any the conditional access device (e.g., a secure non-removable device or an authorization/authentication server). The conditional access card 712 may then extract the control words from the ECMs that it receives and communicate them (see lines 714) to a payload descrambling module 716. Thus, when a user changes channels, and the new channel that has been selected is a stored or buffered channel, the control word for a newly selected channel is already available as the conditional access card 712 has already performed this functionality. Accordingly, the delay in changing channels may be reduced. It will be noted that the CWs, once extracted by the smart card, may be transmitted to the receiver in an encrypted form (e.g., using a receiver specific key). Accordingly, sharing control words and ultimately descrambling movies without authorization may be inhibited. Re-encrypted control words may then be sent to the decoder, which is a secure device that knows the receiver specific secret required to decrypt the re-encrypted CWs. Thus, in an example embodiment, the CW buffer could buffer re-encrypted CWs. In the example embodiment described above, the ECMs may be communicated via a television signal that is broadcast (e.g., via a satellite signal). However, in other embodiments the ECMs may be communicated via a route that is independent of the content being communicated (e.g., the ECMs may be communicated via the Internet or stored in the STB a head of time). In an embodiment the channel information (including ECMs) and the video or television content are communicated via the Internet. As mentioned above, the embodiments described herein are not limited to smart cards and relate to any secure device such as non-removable circuitry, an authorization or authentication server or the like.

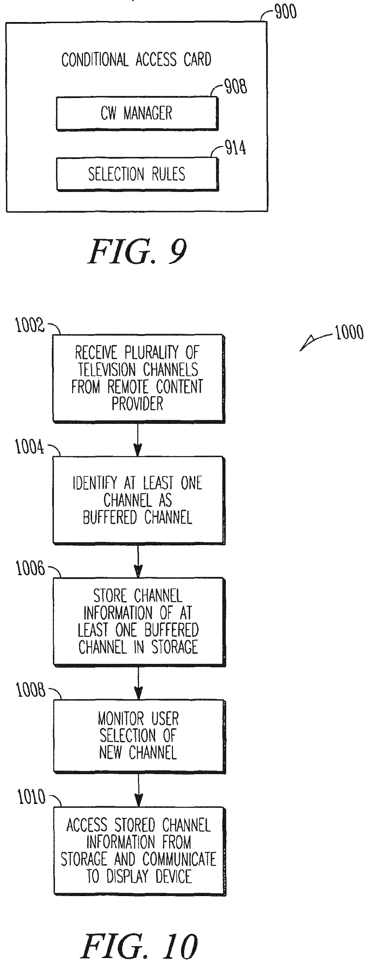

In the embodiment shown in **Figure 7** the selection rules 710 and the control manager 708 are shown, by way of example to be part of the STB. However in an embodiment, the selection rules and the control manager are included within the conditional access card 712 as shown by module 718. Likewise, the input selection rules 614 may be integrated within the conditional access card (e.g., a smart card). **Figure 9** shows an example conditional access card 900 in which a control word manager 908 and selection rules 914 are integrated within the card 900. Further, the ECMs and control words may be communicated serially or in parallel between the conditional access card and the STB.

Thus, in an embodiment as described above, control words are not decrypted as they are needed at the time a user decides to change to a new channel, but as soon as possible, so that the control word has been decrypted by the time it is required to change channels. In many current deployments, control words for a given channel typically change every 5 Seconds or so and may be sent 5 seconds ahead of time. Further, smart cards may need less than 0.5 second to decrypt a control word. As a consequence, a smart card in accordance with an example embodiment of the invention may process control words for as many as 10 channels at the same time, as long as the requests to decrypt control words can be processed in sequence. Thus, STB (or any digital receiver) may collect encrypted control words for multiple channels at any time. The receiver may send requests to decrypt control words sequentially to the conditional access card, or the conditional access card may queue requests internally.

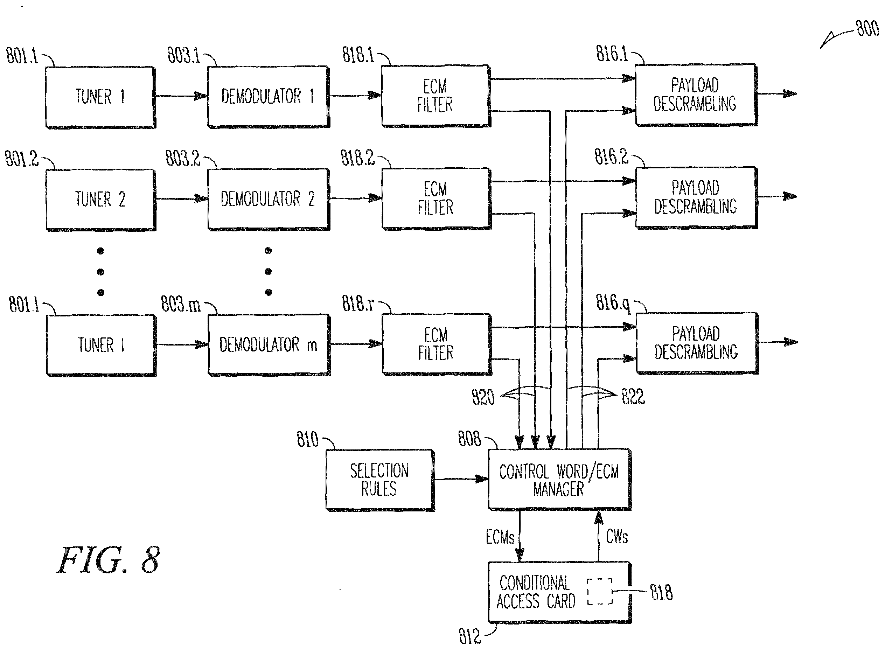

In certain embodiments, different channels may be on different frequencies, in which case multiple tuners may be provided to acquire encrypted control words for the different channels (see **Figure 5**). **Figure 8** shows apparatus 800, in accordance with an example embodiment, that buffers control words to reduce delay between selecting a channel and displaying the selected channel in a television environment. The apparatus 800 includes multiple tuners 801.1-801.1 connected to multiple demodulators 803.1-803.m. ECM filters 818.1-801.r extract ECMs from the received signal and communicates them to a control word manager 808. As described above, the control word manager 808 may identify or select one or more ECMs for one or more channels not currently being viewed based on selection rules provided by a selection rules module 810. The identified ECMs are then communicated (see arrows 820) the to an access control card 812 where they are decrypted and the corresponding control words are sent to the payload descrambling modules 816.1-816.q (see arrows 822). It will be appreciated that each demodulator 818.1-818.r may demodulate multiple channels carried on a single frequency.

In an embodiment with multiple tuners, and the STB or receiver has sufficient memory available, entire streams may be cached in the STB to further accelerate channel change. For example, if I-frames were spaced every 2 seconds, the apparatus could cache 2 seconds of MPEG program stream for another channel not currently being watched. Different criteria could be applied to decide which channels to cache as described above. Thus, for receivers with sufficient memory (even with one tuner), multiple or all channels transmitted on a particular frequency can be cached. An example strategy to decide which channel(s) to cache could be:
- if only one channel can be cached, cache the next channel up/down based on whether the up/down button was pressed last, with the next channel being extracted from the all or favorite list of channels, depending which mode the user has set;
- if two channels can be cached, cache the next sequential channel in the tuning list (up and/or down);
- if n channels can be cached, cache the next sequential channels (up and down), as well a the n-2 channels up or down based on whether the up or down button was pressed last, with the next channel being extracted from the all or favorite list of channels, depending which mode the user has set; and
- if n is large, start caching channels opportunistically, for example based on channels watched most often and/or channels in the same frequency.

It should be noted that the above enumeration of possibilities is not exhaustive and a variety of rules can be employed to make the best use if the caching capabilities of the STB.

**Figure 10** shows a method 1000, in accordance with an example embodiment, to reduce delay when changing channels in a television environment. As shown in block 1002, a plurality of television channels may be received from a remote content provider, for example, via a satellite distribution network, cable distribution network, or the like. Each channel may include channel information required to display the channel. In a STB deployment, one or more of the received channels may be identified (see block 1004) as a buffered channel and channel information of the buffered channel(s) is stored in storage or memory (e.g., in a circular buffer), as shown in block 1006. In an example embodiment, user selection of a different channel to that currently being viewed is monitored (see block 1008) and, if the new channels selected is one of the buffered channels, the stored channel information for display is accessed upon selection of the at least one buffered channel (see block 1010). In an example embodiment, the channel information includes at least one of a MPEG video I-frame and an access control word. Accordingly, when changing channels it may not be necessary to wait for the next I-frame and ECM to display a newly selected channel.

The storage may be updated to maintain a most recently received I-frame, ECMs, and subsequent MPEG signals of the buffered channel. It will be appreciated that the buffered channel may be a second channel signal broadcast over a separate frequency, and that the I-frame for the buffered channel may be placed at a beginning of the storage.

As described above with reference to **Figures 5** **and** **6****,** the stored channel signal may be demodulated and, optionally, decoded prior to selection of the stored channel for display. Control of multiple channels other than a currently viewed channel may be stored or buffered. In an embodiment, display delay may be reduced by lagging the displayed image behind an actual broadcast or accelerating playback of the stored channel to synchronize playback with a live broadcast. At least one channel of the plurality of channels may be identified as a buffered channel and the identification may be based upon channel input selection rules. For example, the selection rules may comprise selecting at least one of an adjacent channel, a favorite channel, and a channel frequently watched. Thus, the STB may monitor use behavior, and in response to monitored behavior buffer channels that a user is more likely to view.

The present invention has been described by way of example in a television environment. However, the present invention may also be embodied in a distributed computer system comprising a server and a client device. The client device may be a hand-held computer, cell phone, personal digital assistant or any device capable of receiving and/or transmitting an electronic signal. In another embodiment, the present invention is implemented as a set of instructions on a computer readable medium, comprising ROM, RAM, CD ROM, Flash or any other computer readable, medium, now known or unknown that when executed cause a computer to implement the method of the present invention.

In an embodiment, the decoder 107 performs access control functionality and thus descrambles incoming television signals. As is known to a person of skill in the art, broadcast television signals are scrambled to restrict access to the television channels carried by the signals. A scrambler module at, for example, a head-end, may include a control word (CW) generator. Control words are required by a STB for decrypting television signals. The control word generator may produces random numbers to scramble the transmitted television signal. An entitlement control message (ECM) generator may encrypt the control word (and other relevant data) for broadcasting as an ECM. An ECM is an access packet that contains information the conditional access card (e.g., a smart card in a STB) needs to determine the control word that decrypts the video content it receives. In order to enhance security, a control word may be changed at regular intervals and a new ECM including the control word is then transmitted or broadcast. Upon receipt of the broadcast signal by the STB, a descrambling process is performed by a decoder of the STB and, in order to accomplish this, the control words are required. It will be appreciated that extraction of the control word from the ECM may also result in delays when changing channels as the STB needs a new CW for the channel that has been selected for viewing by the user. The ECM message may be inserted in a broadcast stream and be received by all STBs listening to a broadcast stream. Only those STBs who have the requisite rights will be able to decrypt the ECM and retrieve the CW required for descrambling. As mentioned above, it is to be appreciated that the ECMs may be received separately from the audio/video.

In certain embodiment, a method, apparatus and device are described which buffer ECMs and CWs. While this mechanism can be used to accelerate channel change, it can also be used in other cases where multiple channels need to be processed at the same time. An example is the case where a Personal Video Recorder (PVR) needs to record one channel while the user watches other channel(s). The PVR may descramble the channel before optionally re-encrypting it using another method (e.g. triple DES or AES). It can also be that the user is watching two channels at the same time (Picture-In-Picture). It can also be that the receiver is processing multiple channels at the same time, to display one channel on a first TV and another channel on another TV. By buffering ECMs/CWs and the related channels, the number of channels that can be processed by the smart card (or any conditional access device) may be increased, since ECMs do not need to be processed real-time. The number of channels that can be subsequently be descrambled or decoded or displayed simultaneously will then become a function of the capabilities of the receiver for descrambling, decoding or display.

Another example is the case where a receiver needs to display a user defined mosaic (multiple channels, e.g., based on user preference or network sorting that may appear on the screen in thumbnail size). Each channel may be transmitted full screen, in which case the receiver would need to decode and resize the channels, or the network operator may decide to transmit a thumbnail size version of each channel in addition to the full-screen version. In either case, the receiver may have to display a combination of channels transmitted separately, and it is possible that each channel will be scrambled separately (since different rights may be associated with different channels). By buffering ECMs/CWs and Audio/Video, the number of channels the smart card can process can be increased, in order to increase the number of channels that can be presented in the mosaic. The number of channels that can be subsequently be descrambled or decoded or displayed simultaneously will then become a function of the capabilities of the receiver for descrambling, decoding or display.

Processing limitations of prior art conditional access cards can result in delays in obtaining control words and thereby prevent, for example, displaying multiple thumbnails where each thumbnail required decoding. Further, prior art conditional access cards process ECMs to extract the control words in real-time and it will be appreciated that this may severely limit the number of channels or thumbnails than can be decoded and displayed by a STB or receiver. In order to enhance the number of channels that may be decoded, in an example embodiment, the controls words are decrypted (extracted from the ECMs) in a sequence and buffered in the STB or receiver (or conditional access card) for sequential processing. Thus, the decryption of the control words may be time shifted to enhance the throughput of control words to the decoder as long as the audio and the video is buffered and the time shifting in the audio and the video corresponds to the time shifting in the control words. In this example embodiment, all control words are not provided in real-time.

In an embodiment, the video stream or television channel is also buffered (e.g., buffered for 5 seconds) and the ECMs are communicated to the conditional access device which then decrypts them in a time-shifted manner. The decrypted control words are then communicated to the decoder to decode the buffered video stream or television channel. For example, in certain broadcast networks, control words for a given channel typically change every 5 seconds and are sent 5 seconds ahead of time. In an example smart card requiring less than 0.5 seconds to decrypt a control word, as many as 10 channels may be processed at the same time when the requests to decrypt control words are processed in a time-shifted sequence.

Thus, in an example embodiment, the method described herein extends to decrypting a plurality of incoming television channels or video streams. For example, the method may include receiving the plurality of television channels and a plurality of encryption keys at the receiver. Thereafter, the encryption keys of more than one television channel are buffered. Each encryption key may be required for decryption of an associated television channel or video stream. A buffered encryption key may be selected from a plurality of buffered encryption keys and an incoming television channel associated with the buffered encryption key may then be decrypted. In an example embodiment, encryption keys are included within the television or video signal. Accordingly, the method may include extracting an encryption key from each television channel. In a different embodiment, the encryption keys are received independently of the television channel. The encryption keys may be control words and thus the method may include buffering Entitlement Control Messages and subsequently extracting the control words, or extracting the control words from the Entitlement Control Messages and then buffering the control words.

In an embodiment, the encryption keys (e.g., Entitlement Control Messages or control words) are buffered in a conditional access device (e.g., a smart card, a non-removable security device embedded in a received, or an authentication server).

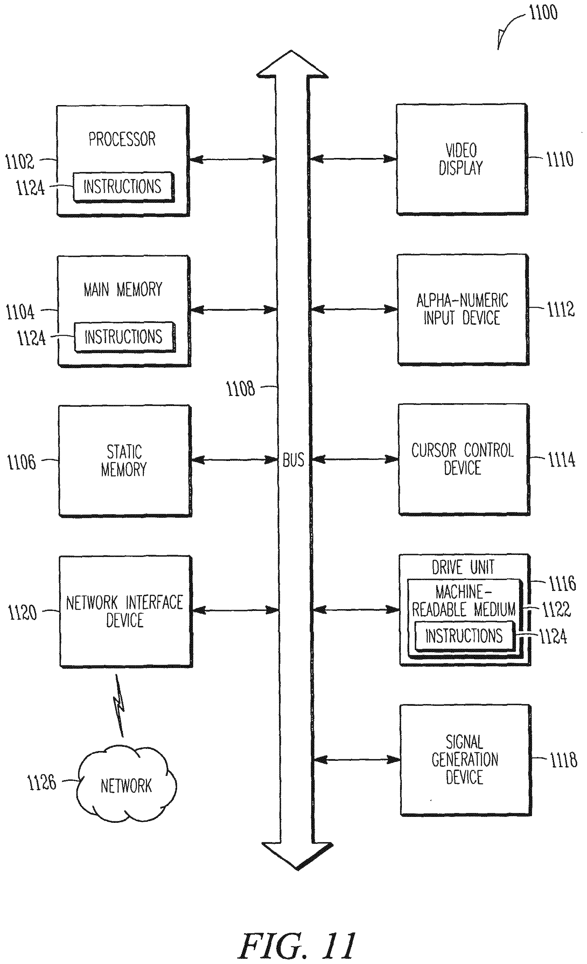

**Figure 11** shows a diagrammatic representation of machine in the example form of a computer system 1100 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1100 includes a processor 1102 (e.g., a central processing unit (CPU), a graphics processing unit (GPU) and/or a digital signal processing unit (DSP)), a main memory 1104 and a static memory 1106, which communicate with each other via a bus 1108. The computer system 1100 may further include a video display unit 1110 (e.g., a liquid crystal display (LCD) or a cathode ray tube (CRT)). The computer system 1100 also includes an alphanumeric input device 1112 (e.g., a keyboard), a user interface (UI) navigation device 1114 (e.g., a mouse), a disk drive unit 1116, a signal generation device 1118 (e.g., a speaker) and a network interface device 1120.

The disk drive unit 1116 includes a machine-readable medium 1122 on which is stored one or more sets of instructions and data structures (e.g., software 1124) embodying or utilized by any one or more of the methodologies or functions described herein. The software 1124 may also reside, completely or at least partially, within the main memory 1104 and/or within the processor 1102 during execution thereof by the computer system 1100, the main memory 1104 and the processor 1102 also constituting machine-readable media.

The software 1124 may further be transmitted or received over a network 1126 via the network interface device 1120 utilizing any one of a number of well-known transfer protocols (e.g., HTTP).

While the machine-readable medium 1122 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media, and carrier wave signals.

The embodiments described herein are shown for purposes of example only and not intended to limit the scope of the invention, which is defined by the following claims.

## Claims

1. A method for reducing delay when video content is to be displayed, the method comprising:
accessing available video content via one or more networks, the available video content including video content not currently being viewed ;
buffering a portion of the video content not currently being viewed by storing a most recently accessed set of one or more related displayable frames of the video content not currently being viewed ;
identifying the portion of the video content not currently being viewed as buffered video content; and
accessing the buffered portion of the video content by accessing the stored most recently accessed set of one or more related displayable frames of the video content not currently being viewed, the buffered portion being accessed for display.

2. The method of claim 1, wherein the buffered portion of the video content comprises at least one of an Entitlement Control Message or an access control word.

3. The method of claim 1, wherein the most recently accessed set of one or more related displayable frames of the video content includes an entry point of the video content not currently being viewed.

4. The method of claim 1, wherein the most recently accessed set of one or more related displayable frames of the video content includes an intra-frame.

5. The method of claim 1, further comprising storing an encryption key of the buffered video content not currently being viewed.

6. The method of claim 5, wherein at least one of an Entitlement Control Message or a control word is stored.

7. The method of claim 1, further comprising supplying the buffered portion of the video content to a demodulator upon selection of the buffered video content.

8. The method of claim 1, further comprising:
decoding first video content for display;
decoding stored second video content, the stored second video content being received via a separate frequency as the first video content; and
supplying the decoded stored second video content to a display buffer for display upon selection of the second video content.

9. The method of claim 1, further comprising:
decoding first video content for display;
decoding stored second video content, the stored second video content being received via the same frequency as the first video content; and
supplying the decoded stored second video content to a display buffer for display upon selection of the second video content.

10. The method of claim 1, further comprising decrypting the buffered video content prior to selection of the buffered video content for display.

11. The method of claim 1, further comprising decoding the buffered video content prior to selection of the buffered video content for display.

12. The method of claim 1, further comprising at least one of reducing display delay by lagging a displayed image of the buffered video content behind an actual broadcast or accelerating playback of the buffered video content to synchronize playback with a live broadcast.

13. The method of claim 1, further comprising identifying the video content not currently being viewed based upon input selection rules, the input selection rules including at least one of: selecting video content of a television channel adjacent to a currently viewed television channel, selecting video content of a favorite television channel, selecting video content of a television channel frequently watched, or selecting video content of a television channel represented in a list of television channels.

14. A computer readable medium embodying instructions which, when executed by a computer, cause the computer to perform the method of claim 1.

15. An apparatus to reduce delay when video content is selected for display, the apparatus comprising:
a receiver to access available video content via one or more networks, the available video content including video content not currently being viewed;
a storage to buffer a portion of the video content not currently being viewed by storing a most recently accessed set of one or more related displayable frames of the video content not currently being viewed;
a processor to identify the portion of the video content not currently being viewed as buffered video content; and
a selector to access the buffered portion of the video content by accessing the stored most recently accessed set of one or more related displayable frames of the video content not currently being viewed, the buffered portion being accessed for display.
